# EUROPÄISCHE PATENTANMELDUNG

(11) **EP 2 602 045 A1**
(43) Veröffentlichungstag der Anmeldung: **12.06.2013**
(21) Anmeldenummer: 11009704.5
(22) Anmeldetag: 08.12.2011
(51) Int. Cl.: B23K 7/00, B22D 11/14, B22D 11/126

(54) **Vorrichtung zum Schneiden eines vertikalen Giessstranges einer Stranggiessanlage, vorzugsweise zur Erzeugung von Stahl-Langprodukten**

(71) Anmelder: SMS Concast AG, 8027 Zürich (CH)
(72) Erfinder: Meier, Thomas, 8200 Schaffhausen (CH); Meier, Marcel, 5454 Bellikon (CH); Dratva, Christian, 8052 Zürich (CH); Eichenberger, Philip, 8700 Küsnacht (CH)
(74) Vertreter: Luchs, Willi

(57) **Zusammenfassung**

Eine Vorrichtung ist zum Schneiden eines Giessstranges einer Stranggiessanlage, vorzugsweise zur Erzeugung von Stahl-Langprodukten, vorgesehen. Sie umfasst quer zum Giessstrang (12) ausgerichtete Schneidbrenner (23) und mehrere, ein Gas gegen den Giessstrang (12) bei der geschnittenen Stelle (15) blasenden Düsen (25) für ein Entfernen der durch das Schneiden entstehenden Bärte (17) seitlich des Giessstranges (12). Die Vorrichtung (20) ist für eine einen vertikal nach unten wegführenden Giessstrang (12) vorgesehen, bei der die jeweilige das Gas gegen den Giessstrang blasende Düse (25) gegen den sich bei der Schnittstelle (15) fortlaufend bildenden Bart (17) derart ausgerichtet ist, dass eine annähernd vollständige Bartentfernung beim abgeschnittenen Giessstrangteil (12') gewährleistet ist. Zudem ist wenigstens eine Wasserspritzdüse (24) angeordnet, durch diese die wegspritzende Brennschlacke (16) vom Wasser beaufschlagt ist und dadurch ein vollständiges Granulieren der Brennschlacke erfolgt.

## Beschreibung

Die Erfindung betrifft eine Vorrichtung zum Schneiden eines Giessstranges einer Stranggiessanlage, vorzugsweise zur Erzeugung von Stahl-Langprodukten nach dem Oberbegriff des Anspruches 1.

Bei einer bekannten Vorrichtung zum brenngratfreien Längsteilen von Brammen gemäss der Druckschrift DE-Gbm-84 28 017 wird die horizontal weglaufende Bramme mittels einer oberhalb dieser angeordneten Brennschneideinrichtung getrennt, wobei letztere beim Brennen mit der gleichen Geschwindigkeit wie die kontinuierlich weglaufende Bramme mitfährt, so dass eine senkrecht zur Längsachse der Bramme verlaufende geschnittene Stirnseite entsteht. Die Blasdüsen aufweisende Brennbartbeseitigungseinrichtung ist dabei fluchtend unterhalb der Brennschneideinrichtung angebracht und führt demgemäss die Bewegungen der Schneideinrichtung mit der gleichen Geschwindigkeit aus. Mit diesen annähernd in horizontaler Richtung ausgerichteten Blasdüsen werden diese beim Schneiden auf der Unterseite der Bramme entstehenden Brenngräte entfernt.

Ausserdem sind unterhalb der Blasdüsen zusätzlich ebenfalls annähernd horizontal verlaufende Spritzwasserdüsen vorgesehen, mittels welchen die nach unten von den Flammbrennern erzeugte Brennschlacke verfestigt und granuliert wird. Eine der Brennbartbeseitigungseinrichtung zugehörige gekühlte Prallplatte, die unmittelbar unterhalb der Bramme annähernd senkrecht zu dieser angeordnet ist, dient zum Auffangen sowohl der Gräte als auch der Granulate, welche dann nach unten fallen und dort aufgefangen werden können.

Der vorliegenden Erfindung liegt die Aufgabe zugrunde, eine Vorrichtung zum Längsteilen von Giesssträngen zu schaffen, durch welche eine optimale Bartentfernung und Verarbeitung der Brennschlacke mit einfachen konstruktiven Mitteln erzielt werden kann.

Die Aufgabe ist erfindungsgemäss durch die Merkmale des Anspruches 1 gelöst.

Mit dieser erfindungsgemässen Vorrichtung ist vorgesehen, dass der Giessstrang vertikal nach unten wegführt ist, bei der die jeweilige das Gas gegen den Giessstrang blasende Düse auf der Unterseite der Schnittstelle mit dem Schneidbrenner gegen den sich fortlaufend bildenden Bart derart ausgerichtet ist, dass eine annähernd vollständige Bartentfernung beim abgeschnittenen Giessstrangteil gewährleistet ist, und dass die wenigstens eine Wasserspritzdüse auf der Oberseite der Schnittstelle angeordnet ist und der Wasserstrahl nach unten ausgerichtet ist, derart, dass die gesamte wegspritzende Brennschlacke vom Wasser beaufschlagt wird und sich dadurch ein vollständiges Granulieren derselben entsteht.

Damit sind optimalere Bedingungen sowohl für ein einwandfreies Entfernen der sich beim Brennen bildenden Bärte als auch eine bessere Granulierung der von den Brennern mit hoher Geschwindigkeit geschaffen.

Die Erfindung sowie weitere Vorteile derselben sind nachfolgend anhand eines Ausführungsbeispiels unter Bezugnahme auf die Zeichnung näher erläutert. Es zeigt:
- Fig. 1: eine teilweise schematische Ansicht einer Stranggiessanlage mit einer erfindungsgemässen Vorrichtung zum Schneiden des Giessstranges; und
- Fig. 2: einen Querschnitt des Giessstranges bei Schnittstelle mit den schematisch veranschaulichten Brennern und der Düsen zum Wegblasen der Bärte.

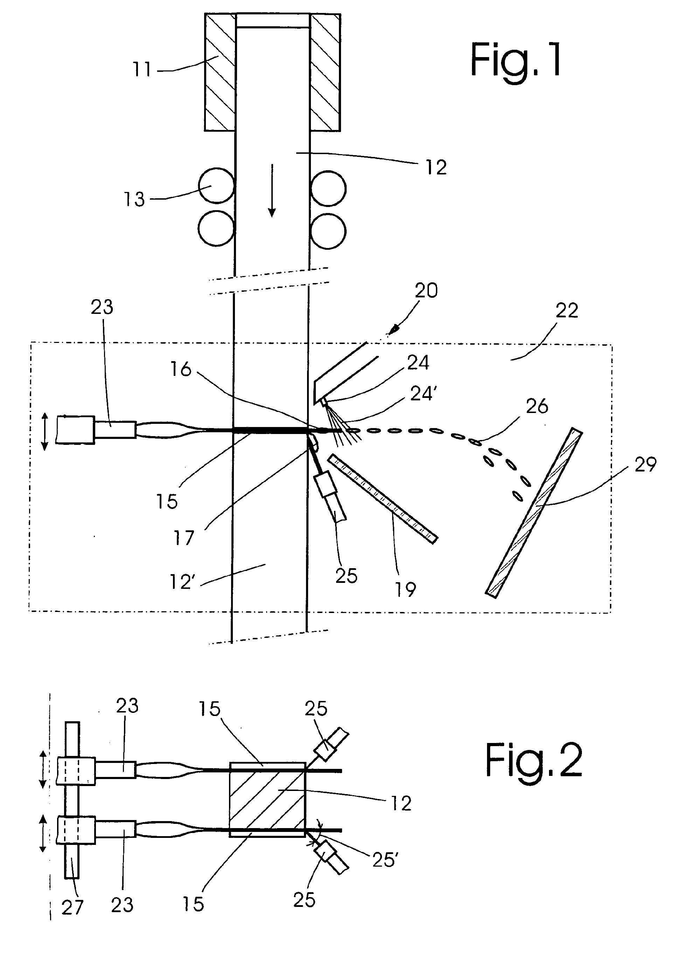

In Fig. 1 ist eine Stranggiessanlage 10 in teilweiser schematischer Ansicht gezeigt, welche insbesondere zur Erzeugung von Stahl-Langprodukten vorgesehen ist. Die flüssige Metallschmelze wird von einem nicht gezeigten Behälter in geregelter Menge in eine Kokille 11 gefüllt und in dieser wird ein vertikal nach unten verlaufender Giessstrang 12 abgegossen. Mit den angedeuteten Führungsrollen 13 auf der Unterseite der Kokille 11 ist der Giessstrang 12 in an sich herkömmlicher Weise geführt.

Eine nicht im Detail veranschaulichte Vorrichtung 20 weist eine mechanische Einheit 22 auf, vorzugsweise einen Rahmen, in welchem mit einer Flamme bzw. mit Sauerstoff arbeitende Schneidbrenner 23, Wasserspritzdüsen 24 und Düsen 25 zum Einblasen von vorzugsweise Luft und ausserdem ein Ablenkelement 19 bzw. Auffangelement 29 angeordnet sind, die allesamt nur schematisch angedeutet sind.

Erfindungsgemäss ist die Vorrichtung 20 für diesen vertikal nach unten kontinuierlich wegführenden Giessstrang 12 vorgesehen, bei der diese die Luft gegen den mit den Schneidbrennern 23 erzeugten Schnittstelle 15 des Giessstranges 12 blasenden Düse 25 auf der Unterseite bzw. die Wasserspritzdüse 24 auf der Oberseite zu der Schnittstelle 15 angeordnet sind.

Die Luft zublasenden Düsen 25 sind gegen den sich fortlaufend bildenden Bart derart ausgerichtet, dass eine annähernd vollständige Bartentfernung beim abgeschnittenen Giessstrangteil gewährleistet ist, indes die Wasserspritzdüsen 24 derart nach unten ausgerichtet sind, dass die gesamte aus dem geschnittenen Spalt des Stranges 12 wegspritzende Brennschlacke 16 vom Wasser 24' beaufschlagt wird und daraus ein sich verfestigendes Granulat 26 entsteht.

Zweckmässigerweise sind die auf der Unterseite der Schnittstelle 15 angeordneten Düsen 25 für das nach oben erfolgende Zublasen von Gas, vorzugsweise Luft, bzw. ihre Blasrichtung in einem definierten Winkel zum Giessstrang 12 angeordnet, wobei dieser Winkel vorteilhaft als spitzer Winkel, zum Beispiel ca. 20° ist, damit die Luft zwischen Bart 17 und Aussenfläche des Giessstrangteils 12' einblasbar ist.

Diesen Düsen 25 ist ferner eine Schutzeinrichtung zugeordnet, welche dieses Ablenkelement 19 oder dergleichen umfasst, durch welches der von oben nach unten erzeugte Wasserkegel mit der Schlacke bzw. dem Granulat von der Düse 25 ferngehalten und dieses Gemisch vom Ablenkelement 19 zu einem nicht gezeigten Auffanggefäss geführt wird.

Neben der Schutzeinrichtung mit dem Ablenkelement 19 ist ausserdem ein Auffangelement 29 vorgesehen, durch welches das Gemisch aus Wasser und dem Granulat gesammelt und zu dem Auffanggefäss geführt wird.

Die gesamte Einheit 22 und damit die Schneidbrenner 23, die Wasserspritzdüsen 24, die Düsen 25, das Ablenkelement 19 und das Auffangelement 29 sind auf Schienen oder dergleichen vertikal verstellbar angeordnet und bewegen sich beim Brennen mit der gleichen Geschwindigkeit bzw. Richtung wie der kontinuierlich nach unten weglaufende Giessstrang 12.

Der jeweilige Schneidbrenner 23 ist zudem quer von aussen nach innen zum Querschnitt des Giessstranges verstellbar, so dass eine senkrecht zur Längsachse des Giessstranges verlaufende Stirnseite entsteht.

Zudem werden im Rahmen der Erfindung die Düsen 25 bzw. Wasserspritzdüsen 24 beim Brennen ebenfalls mit der gleichen kontinuierlichen Geschwindigkeit wie der Giessstrang 12 nach unten bewegt, was ebenfalls nicht näher gezeigt ist.

Wie aus Fig. 2 ersichtlich ist, schliesst die jeweilige Düse 25 und ihre Blasrichtung bezüglich des zum Giessstrang 12 gegenüberliegenden Schneidbrenners überdies einen Winkel 25' ein, der ein Blasen der Düse 25 in der Bewegungsrichtung des Schneidbrenners 23 bewirkt.

Die beiden vorgesehenen Schneidbrenner 23 werden auf einer angedeuteten Schiene 27 oder dergleichen gegen das Zentrum des Giessstranges 12 hin bewegt, bis der Strang durchgeschnitten ist. Die Düsen 25 sind vorteilhaft mit den Schneidbrennern 23 gekoppelt und verfahren gleichsam nach innen, so dass die zugeblasene Luft der jeweiligen Düse 25 stets direkt auf den vom jeweiligen Schneidbrenner erzeugten Bart gerichtet ist.

Die Erfindung ist mit dem oben erläuterten Ausführungsbeispiel ausreichend geoffenbart. Sie könnte selbstverständlich noch anders ausgebildet sein. So könnten beispielsweise die das Gas zublasenden Düsen bzw. die eine oder mehreren Wasserspritzdüsen beim Brennen stationär angeordnet sein. Die Öffnungen der Düsen könnten auch schlitzförmig ausgebildet sein, damit ein messerartiges Schneiden des sich über eine gewisse Länge der Schnittstelle entstehenden Bartes erfolgen würde. Diese Düsen könnten ferner auch auf der Oberseite zur Schnittstelle bzw. die Wasserspritzdüsen auf der Unterseite angeordnet sein. Auch dieses Ablenkelement und das Auffangelement könnten anders als dargestellt ausgebildet sein.

Es könnte auch nur ein Schneidbrenner und eine Düse vorgesehen sein, welche dann über den gesamten Strangquerschnitt verfahren würden.

## Patentansprüche

1. Vorrichtung zum Schneiden eines Giessstranges einer Stranggiessanlage, vorzugsweise zur Erzeugung von Stahl-Langprodukten, welche aus wenigstens einem quer zum Giessstrang (12) ausgerichteten Schneidbrenner (23), aus einer oder vorzugsweise mehreren, ein Gas gegen den Giessstrang (12) bei der geschnittenen Stelle (15) blasenden Düsen (25) für ein Entfernen der durch das Schneiden entstehenden Bärte (17) seitlich des Giessstranges (12) sowie aus mindestens einer gegen die von dem mindestens einen Schneidbrenner (23) wegspritzenden Brennschlacke (16) blasenden Wasserspritzdüse (24) zusammengesetzt ist, **dadurch gekennzeichnet, dass**
die Vorrichtung (20) für eine einen vertikal nach unten wegführenden Giessstrang (12) vorgesehen ist, bei der die jeweilige das Gas gegen den Giessstrang blasende Düse (25) gegen den sich bei der Schnittstelle fortlaufend bildenden Bart (17) derart ausgerichtet ist, dass eine annähernd vollständige Bartentfernung beim abgeschnittenen Giessstrangteil (12') gewährleistet ist, und dass die wenigstens eine Wasserspritzdüse (24) derart angeordnet ist, so dass die wegspritzende Brennschlacke (16) vom Wasser beaufschlagt ist und dadurch ein Granulieren der Brennschlacke erfolgt.

2. Vorrichtung nach Anspruch 1, **dadurch gekennzeichnet, dass** zumindest die wenigstens eine auf der Unterseite der Schnittstelle (15) angeordnete Düse (25) für das nach oben erfolgende Zublasen von Gas, vorzugsweise Luft, mit einer Blasrichtung in einem definierten Winkel zum Giessstrang (12) angeordnet ist.

3. Vorrichtung nach Anspruch 2, **dadurch gekennzeichnet, dass** die jeweilige Düse (25) und ihre Blasrichtung bezüglich des zum Giessstrang (12) gegenüberliegenden Schneidbrenners (23) überdies einen Winkel einschliesst, der ein Blasen der Düse (25) in der Bewegungsrichtung des Schneidbrenners (23) bewirkt.

4. Vorrichtung nach Anspruch 2 oder 3, **dadurch gekennzeichnet, dass** dieser wenigstens einen Düse (25) für das Zublasen von Gas eine Schutzeinrichtung zugeordnet ist, welche ein Ablenkelement (19) umfasst, durch welches das herabfallende Wasser (24') mit der Schlacke bzw. dem Granulat (26) von der Düse (25) fernhält und dieses Gemisch von ihm dabei zu einem Auffanggefäss geführt wird.

5. Vorrichtung nach Anspruch 4, **dadurch gekennzeichnet, dass** neben der Schutzeinrichtung der Düse (25) ausserdem ein Auffangelement (29) vorgesehen ist, durch welches das Gemisch aus Wasser und dem Granulat (26) zu einem Auffanggefäss geführt wird.

6. Vorrichtung nach Anspruch 1, **dadurch gekennzeichnet, dass** der oder die Schneidbrenner (23) vertikal höhenbewegbar sind und beim Brennen die gleiche Geschwindigkeit bzw. Richtung wie der kontinuierlich nach unten weglaufende Giessstrang (12) ausführen, und der jeweilige Schneidbrenner (23) zudem quer vorzugsweise von aussen nach innen zum Querschnitt des Giessstranges verstellbar ist, so dass eine senkrecht zur Längsachse des Giessstranges verlaufende Stirnseite entsteht.

7. Vorrichtung nach Anspruch 6, **dadurch gekennzeichnet, dass** die Düsen (25) mit den Schneidbrennern (23) quer zum Giessstrang (12) gekoppelt und gleichsam verstellbar sind, so dass die zugeblasene Luft der jeweiligen Düse (25) stets direkt auf den vom jeweiligen Schneidbrenner erzeugten Bart gerichtet ist.

8. Vorrichtung nach Anspruch 6, **dadurch gekennzeichnet, dass** eine Bewegung der jeweiligen Düse (25) bzw. Wasserspritzdüse (24) beim Brennen ebenfalls mit der gleichen Geschwindigkeit wie der kontinuierlich nach unten weglaufende Giessstrang erfolgt.

9. Vorrichtung nach Anspruch 6, 7 oder 8, **dadurch gekennzeichnet, dass** eine auf Schienen oder dergleichen vertikal bewegbare Einheit (22) vorgesehen ist, in welcher die Schneidbrenner (23), die Wasserspritzdüsen (24), die Düsen (25), das Ablenkelement (19) und das Auffangelement (29) aufgenommen sind, die sich beim Brennen gemeinsam mit der gleichen Geschwindigkeit bzw. Richtung wie der kontinuierlich nach unten weglaufende Giessstrang (12) bewegen.

10. Vorrichtung nach einem der Ansprüche 1 bis 5, **dadurch gekennzeichnet, dass** die jeweiligen Düse bzw. Wasserspritzdüse beim Brennen stationär angeordnet ist.

11. Stranggiessanlage, vorzugsweise zur Erzeugung von Stahl-Langprodukten, mit einer Vorrichtung nach einem der Ansprüche 1 bis 10.
